# EUROPEAN PATENT APPLICATION

(11) **EP 4 498 496 A1**
(43) Date of publication of application: **29.01.2025**
(21) Application number: 23774333.1
(22) Date of filing: 16.02.2023
(51) Int. Cl.: H01M 50/271, H01M 50/202, H01M 50/213

(54) **BATTERY PACK**

(30) Priority: 23.03.2022 JP 2022047266
(71) Applicant: Panasonic Energy Co., Ltd., Osaka 570-8511 (JP)
(72) Inventor: TAKEDA Kensaku, Kadoma-shi, Osaka 571-0057 (JP)
(74) Representative: Novagraaf International SA
(86) International application number: PCT/JP2023/005586
(87) International publication number: WO 2023/181734

(57) **Abstract**

A housing is divided into a first case and a second case. The first case and the second case are joined at a position where the first case and the second case overlap each other, and include at the position: a first engagement mechanism in which the first case includes a first protrusion protruding in first direction DA at a part of an end edge of the first case, and the second case includes a second recess formed at a position corresponding to the first protrusion in a part of an end edge of the second case when the second case is joined to the first case; and a second engagement mechanism in which the first case includes a first recess provided at a position separated from the first protrusion in another part of the end edge, and the second case includes a second protrusion formed at a position separated from the second recess in another part of the end edge, the position corresponding to the first recess when the second case is joined to the first case, and the second protrusion protruding in second direction DB opposite to first direction DA.

## Description

### TECHNICAL FIELD

The present disclosure relates to a battery pack.

### BACKGROUND ART

A battery pack in which a large number of secondary battery cells are connected in series and in parallel is used as a power source for a portable electric device such as an electric cleaner or an electric power tool, or as a backup power source for a server or a power source device for home use, business use, or factory use for stationary storage, and is further used as a power source for driving an assist bicycle, an electric scooter, an electric cart, a power source for driving a vehicle such as a hybrid vehicle or an electric vehicle, or the like. This kind of battery pack has a structure in which a core block holding a plurality of secondary battery cells is housed in an exterior case constituting an outer shape of the battery pack in many cases (e.g., PTL 1).

The exterior case is generally binary-divided up and down, or right and left. The exterior case divided into two divided cases as described above includes one case provided with a claw structure, and the other case provided with a hole for locking the claw, and the divided cases are fitted by fitting of the claw and the hole.

Unfortunately, there is a problem that the claw fitting is likely to be disengaged when a wall is deformed outward due to an increase in internal pressure of the battery pack.

### Citation List

### Patent Literature

PTL 1: Unexamined Japanese Patent Publication No. 2003-123715

### SUMMARY OF THE INVENTION

It is an object of the present disclosure to provide a battery pack in which fitting of a claw is less likely to be disengaged.

A battery pack according to an aspect of the present disclosure includes: one or more secondary battery cells; and a housing forming a housing space for housing the one or more secondary battery cells. The housing is divided into a first case and a second case. The first case and the second case are joined at a position where the first case and the second case overlap each other, and include at the position: a first engagement mechanism in which the first case includes a first protrusion protruding in a first direction at a part of an end edge of the first case, and the second case includes a second recess formed at a position corresponding to the first protrusion in a part of an end edge of the second case when the second case is joined to the first case; and a second engagement mechanism in which the first case includes a first recess provided at a position separated from the first protrusion in another part of the end edge of the first case, and the second case includes a second protrusion formed at a position separated from the second recess in another part of the end edge of the second case, the position corresponding to the first recess when the second case is joined to the first case, and the second protrusion protruding in a second direction opposite the first direction.

The battery pack according to the aspect of the present disclosure acquires an advantage in that the housing divided into the first case and the second case includes the first protrusion and the second protrusion provided in the first case and the second case, respectively, while protruding the first protrusion and the second protrusion in directions opposite to each other, so that even when one protrusion is deformed in a direction in which the protrusion is disengaged when stress is applied to the battery pack to deform the battery pack, the other protrusion acts in a direction in which the protrusion is engaged, thereby resulting in reducing possibility that the protrusion is disengaged due to external force.

### BRIEF DESCRIPTION OF THE DRAWINGS

Fig. 1 is an external perspective view illustrating a battery pack according to an exemplary embodiment of the present disclosure.
Fig. 2 is an exploded perspective view of the battery pack of Fig. 1.
Fig. 3 is an exploded perspective view of the battery pack of Fig. 1 as viewed from behind.
Fig. 4 is a sectional perspective view taken along line IV-IV in Fig. 2.
Fig. 5 is a perspective view of the battery pack of Fig. 1 as viewed from behind, in which a part of an external wall is cut.
Fig. 6 is an exploded perspective view of the battery pack of Fig. 5.
Fig. 7 is a sectional perspective view taken along line VII-VII in Fig. 3.
Fig. 8 is a sectional view with an enlarged view of a main part taken along line VIII-VIII in Fig. 1.
Fig. 9 is a sectional perspective view with an enlarged view of a main part taken along line VIII-VIII in Fig. 1.
Fig. 10 is an exploded perspective view of the battery pack of Fig. 9.
Fig. 11 is a sectional view with an enlarged view of a main part taken along line XI-XI in Fig. 1.
Fig. 12 is a sectional perspective view taken along line XI-XI in Fig. 1.
Fig. 13 is an exploded perspective view of the battery pack of Fig. 12.
Fig. 14 is a sectional view with an enlarged view of a main part taken along line XIV-XIV in Fig. 1.
Fig. 15 is a sectional perspective view taken along line XIV-XIV in Fig. 1.
Fig. 16 is an exploded perspective view of the battery pack of Fig. 15.
Fig. 17 is an enlarged perspective view of a main part of Fig. 6.
Fig. 18 is a horizontal sectional view taken along line XVIII-XVIII of the battery pack of Fig. 1.
Fig. 19 is a sectional view illustrating a state in which stress for deforming a first case and a second case into a dogleg shape is applied in Fig. 11.
Fig. 20 is a sectional view illustrating a state in which stress for deforming a first case and a second case into a dogleg shape is applied in Fig. 11.
Fig. 21 is a sectional view illustrating a state in which stress for deforming a first case and a second case into a dogleg shape is applied in Fig. 14.
Fig. 22 is a sectional view illustrating a state in which stress for deforming a first case and a second case into a dogleg shape is applied in Fig. 14.
Fig. 23 is a sectional view illustrating a fitting structure of a battery pack according to a comparative example.
Fig. 24 is a sectional view illustrating a state in which the fitting structure of the battery pack of Fig. 23 is loosened.

### DESCRIPTION OF EMBODIMENT

Exemplary embodiments of the present disclosure may be specified by the following configurations and features.

A power source device according to another aspect of the present disclosure in the above aspect is configured such that the second case includes an external wall constituting a surface of the housing, and an internal wall separated from the external wall in the housing space, and the second protrusion protrudes into an insertion space defined by the external wall and the internal wall, and the internal wall being provided with the second recess. The above configuration allows a double wall structure to be formed inside the housing to fabricate an engagement mechanism using the protrusions protruding in respective directions opposite to each other.

A power source device according to another aspect of the present disclosure in any one of the above aspects is configured such that the internal wall is partially provided along an inner surface of the external wall.

A power source device according to still another aspect of the present disclosure in any one of the above aspects is configured such that the first case includes an intermediate wall inserted between the external wall and the internal wall, and the intermediate wall is provided with the first protrusion and the second recess. The above configuration allows the intermediate wall to be sandwiched between the internal wall and the external wall while providing the first engagement mechanism and the second engagement mechanism of the first case and the second case in an interface between the intermediate wall and the internal wall, so that deformation of the intermediate wall can be suppressed to stabilize the engagement.

A power source device according to still another aspect of the present disclosure in any one of the above aspects is configured such that the housing is formed in a square shape in plan view, and the first engagement mechanism and the second engagement mechanism are provided on at least one of opposing sides of the square shape. The above configuration enables the first case and the second case to be stably connected by providing the engagement mechanism on at least one of a pair of sides forming the square shape.

A power source device according to still another aspect of the present disclosure in any one of the above aspects is configured such that the housing is formed in a rectangular shape in plan view, and the first engagement mechanism and the second engagement mechanism are provided on at least one of long sides of the rectangular shape.

A power source device according to still another aspect of the present disclosure in any one of the above aspects is configured such that the first engagement mechanism and the second engagement mechanism are provided on one of long sides of the rectangle of the housing, and any one of the first engagement mechanism and the second engagement mechanism is provided on the other of the long sides of the rectangle of the housing.

A power source device according to still another aspect of the present disclosure in any one of the above aspects is configured such that the first protrusion or the second protrusion is formed in a claw shape, and the second recess or the first recess is formed in a hole shape to be engaged with the first protrusion or the second protrusion in the claw shape.

Exemplary embodiments of the present disclosure are described below with reference to the drawings. However, the exemplary embodiments described below are examples for embodying the technical idea of the present disclosure, and the present disclosure is not limited to the exemplary embodiments described below. The present specification does not certainly specify members indicated in the scope of claims to the members of the exemplary embodiments. In particular, the dimensions, materials, shapes, relative arrangements, and the like of the components described in the exemplary embodiment are not intended to limit the scope of the present disclosure exclusively unless otherwise specified, and are merely illustrative examples. Members shown in each drawing have sizes, positional relationships, or the like that may be exaggerated for clarity of description. The same names and reference numerals in the following description indicate the same or similar members, and detailed description thereof will not be appropriately described. Each element constituting the present disclosure may be configured such that a plurality of elements is formed of one member to allows the one member to serve as the plurality of elements, conversely, a function of one member is shared and implemented by a plurality of members.

A battery pack of the present disclosure is available as a power source for a portable electric device such as an electric cleaner or an electric power tool, or as a backup power source for a server or a power source device for home use, business use, or factory use for stationary storage, and is further used as a power source for driving an assist bicycle, an electric scooter, an electric cart, a power source for driving a vehicle such as a hybrid vehicle or an electric vehicle, or the like. Hereinafter, a battery pack used as a power source for a portable electric device will be described as an exemplary embodiment of the present disclosure.

### [First exemplary embodiment]

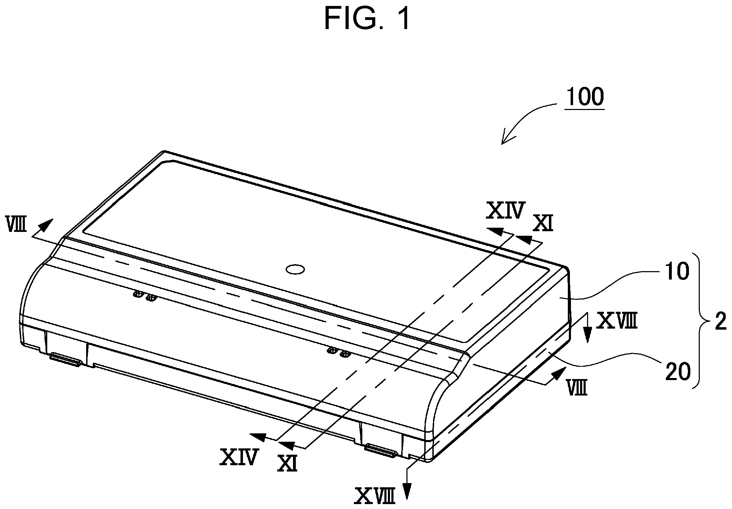

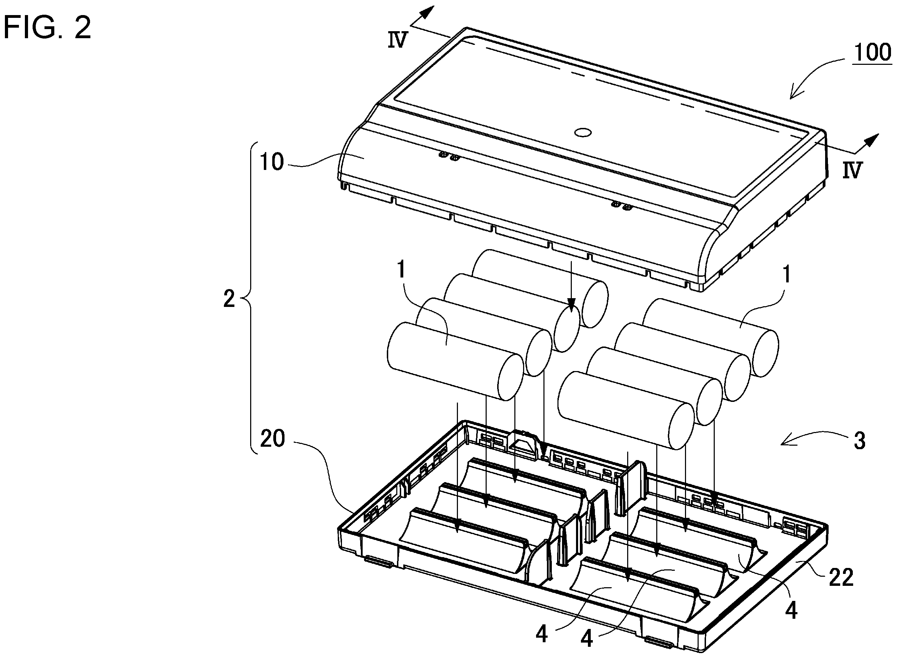

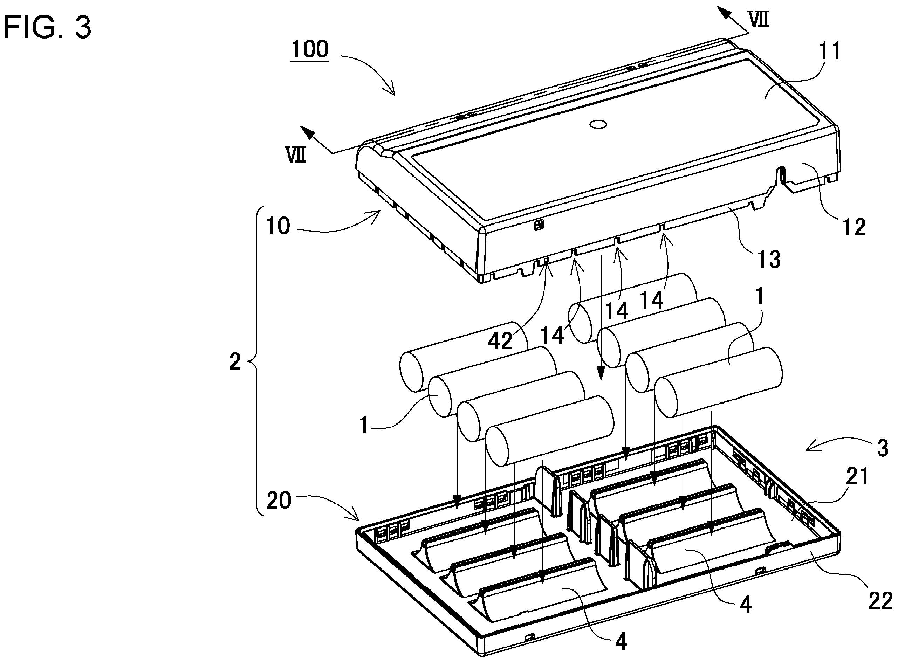

Battery pack 100 according to a first exemplary embodiment of the present disclosure is illustrated in Figs. 1 to 3. In these drawings, Fig. 1 is an external perspective view illustrating battery pack 100 according to an exemplary embodiment of the present disclosure, Fig. 2 is an exploded perspective view of battery pack 100 of Fig. 1, and Fig. 3 is an exploded perspective view of battery pack 100 of Fig. 1 as viewed from behind. Battery pack 100 illustrated in these drawings includes one or more secondary battery cells 1 and housing 2.

Housing 2 has an outer shape of the shape of a box, and is internally provided with housing space 3 for housing secondary battery cells 1, a circuit board, and the like. The examples of Figs. 1 and 2 include housing 2 formed in a flat plate shape having an R-shaped front edge. However, the housing is not limited to this shape in the present disclosure, and may have any shape.

One or more secondary battery cells 1 are disposed in housing space 3 in housing 2. In the examples of Figs. 2 and 3, each secondary battery cell 1 is a cylindrical secondary battery cell with an exterior can in a cylindrical shape. Housing 2 includes curved surface 4 formed along a cylindrical exterior can for disposing each secondary battery cell 1. Here, two rows of four secondary battery cells 1, i.e., a total of eight secondary battery cells 1 are housed in housing 2. These secondary battery cells 1 are connected in series or in parallel with a lead plate or the like. The secondary battery cells are appropriately determined on shape and number according to specifications required for the battery pack. For example, a secondary battery cell called a prismatic battery, a laminate type, a pouch type, or the like may be used. Additionally, a battery holder that holds the secondary battery cell may be separately provided. In this case, the battery holder is housed in housing space 3 in housing 2.

### (Secondary battery cell 1)

Secondary battery cell 1 in a cylindrical shape includes opposite end surfaces serving as terminal surfaces. One of the terminal surfaces is provided with a safety valve. The safety valve is a member configured to open to release internal gas when internal pressure of the exterior can increases. Although the safety valve is typically provided on a positive electrode side, the present disclosure does not specify the positive electrode side as a position where the safety valve is provided. Thus, the safety valve may be provided at another position, such as that on a negative electrode side.

As secondary battery cell 1 described above, a lithium ion secondary battery in a cylindrical shape can be suitably used.

However, the battery pack of the present disclosure does not specify not only a cylindrical battery but also a lithium ion secondary battery as the secondary battery cell. As the secondary battery cell, all chargeable batteries, such as a nickel-metal hydride battery and a nickel-cadmium battery, can also be used.

### (Housing 2)

As illustrated in Figs. 2 and 3, housing 2 is divided into first case 10 and second case 20. First case 10 includes top surface 11 and first wall part 12 continuous from around top surface 11.

Second case 20 includes bottom surface 21 and external wall 22 continuous from around bottom surface 21. Second case 20 is formed as a low height type in which external wall 22 is lower than first wall part 12. Each drawing shows an example in which although an upper side is defined as first case 10 and a lower side is defined as second case 20, the lower side may be defined as the first case and the upper side may be defined as the second case. Housing 2 described above is made of a material having insulating properties and flexibility, preferably made of resin. Specifically, polycarbonate, ABC resin, and the like can be suitably used.

### (Engagement mechanism)

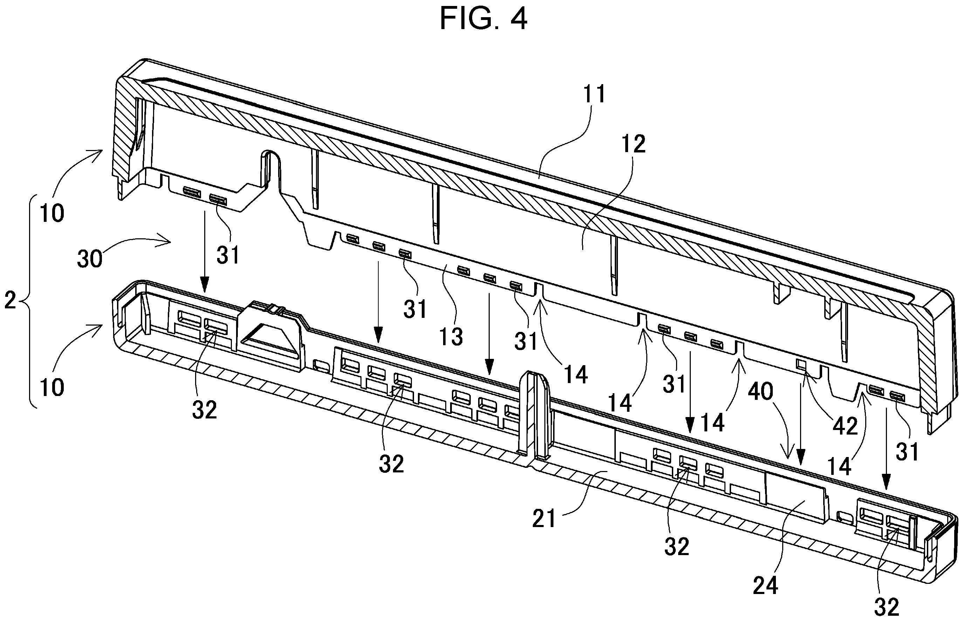

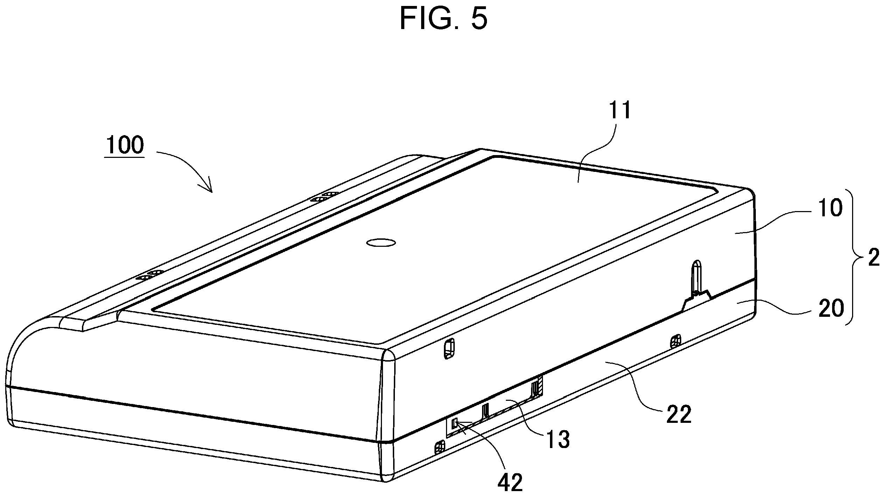

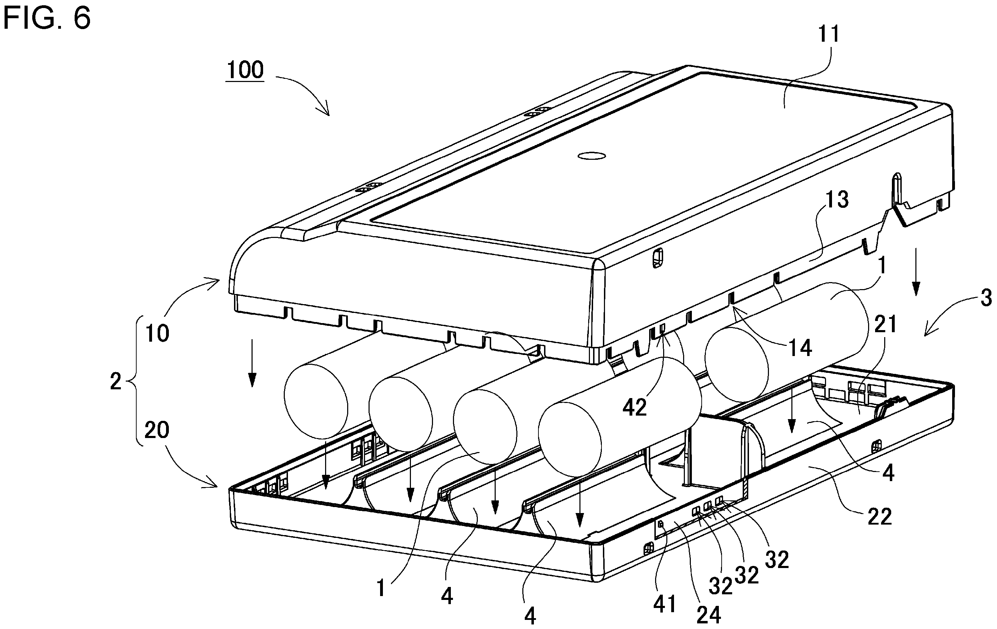

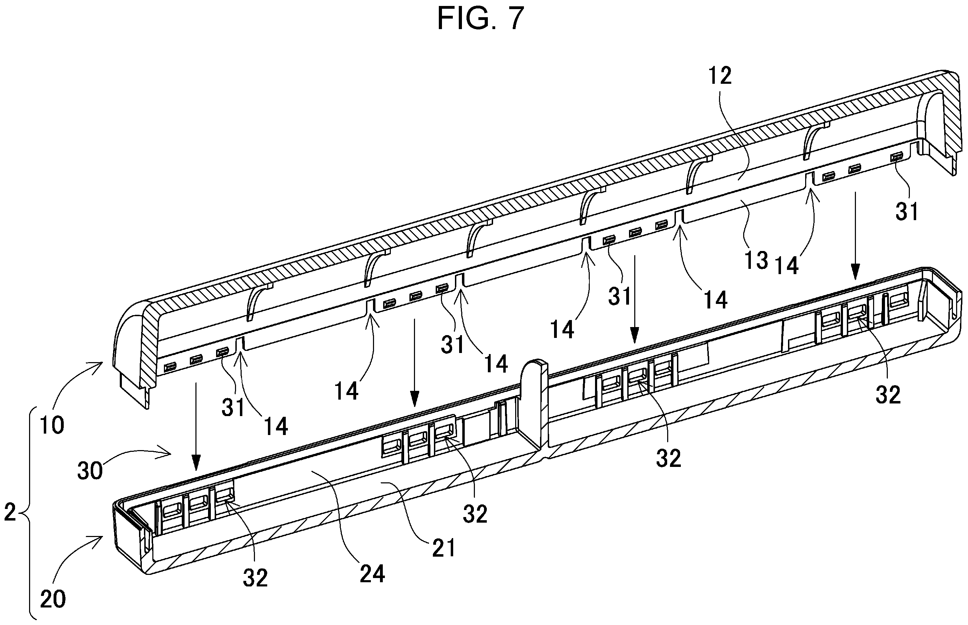

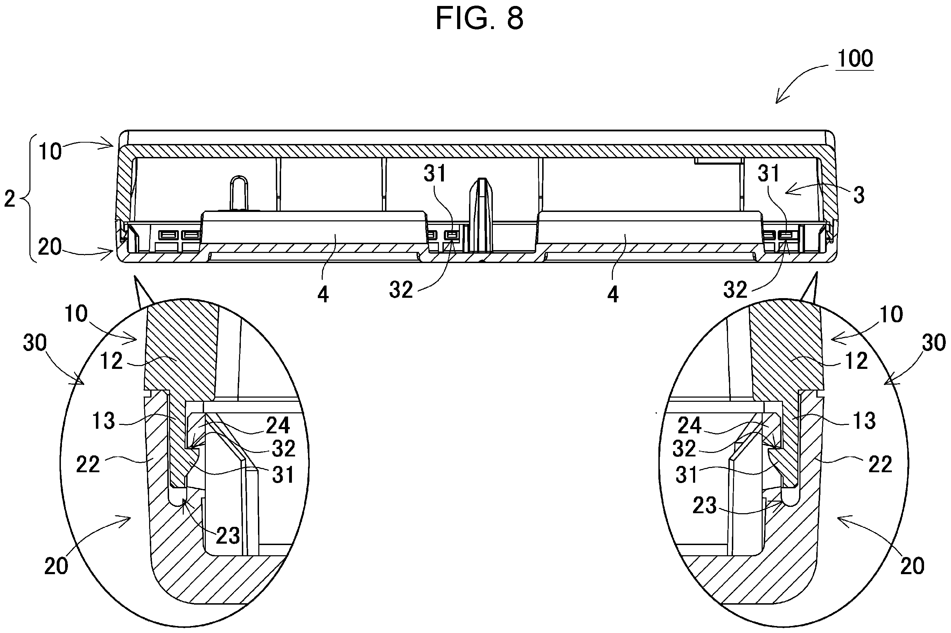

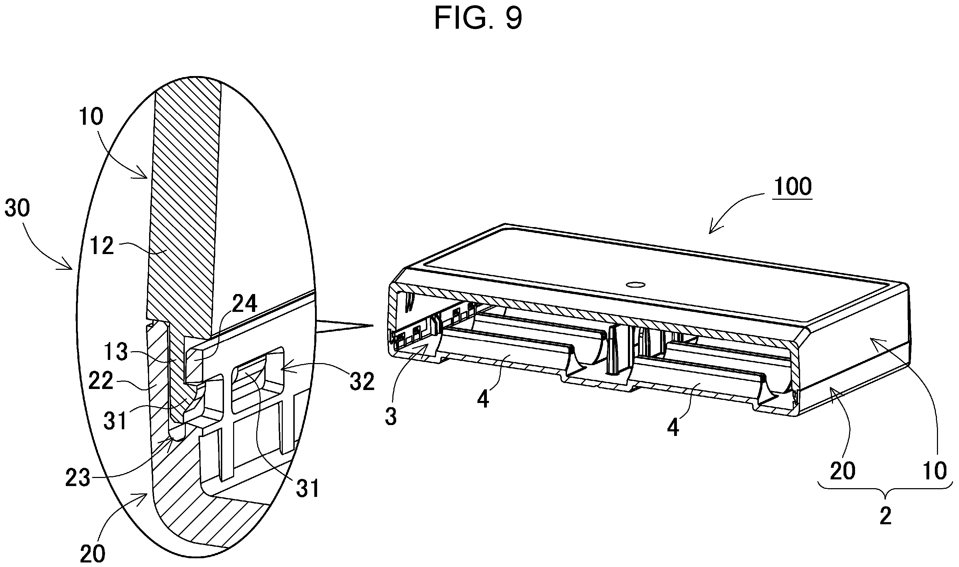

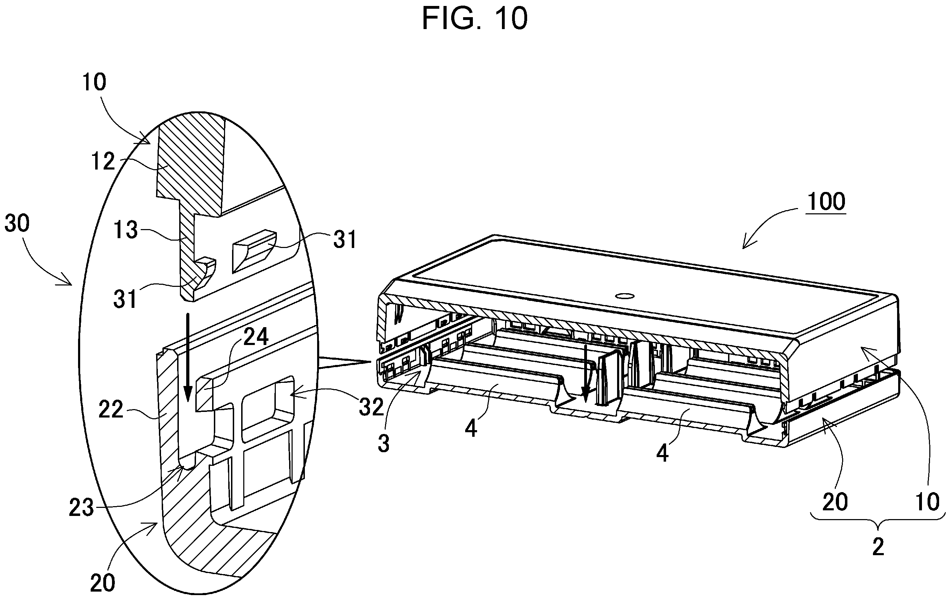

First case 10 and second case 20 are engaged by engagement mechanisms. The engagement mechanisms are provided at a plurality of positions where first case 10 and second case 20 overlap each other when first case 10 and second case 20 are joined. The examples of Figs. 2 and 3 each show housing 2 in a rectangular shape in plan view, and the engagement mechanisms that are provided on a pair of long sides and a pair of short sides, which constitute the rectangle, for engagement. The engagement mechanisms for engaging first case 10 and second case 20 may be common in structure or may be different in structure for each part or each side. Here, first engagement mechanism 30 and second engagement mechanism 40 are prepared as the engagement mechanisms. Here, first engagement mechanism 30 and second engagement mechanism 40 are illustrated in Figs. 4 to 10. These drawings include: Fig. 4 that is a sectional perspective view taken along line IV-IV in Fig. 2; Fig. 5 that is a perspective view of battery pack 100 of Fig. 1 as viewed from behind; Fig. 6 that is an exploded perspective view of battery pack 100 of Fig. 5; Fig. 7 that is a sectional perspective view taken along line VII-VII in Fig. 3; Fig. 8 that is a sectional view with an enlarged view of a main part taken along line VIII-VIII in Fig. 1; Fig. 9 that is a sectional perspective view with an enlarged view of a main part taken along line VIII-VIII in Fig. 1; and Fig. 10 that is an exploded perspective view of battery pack 100 of Fig. 9. Subsequent drawings illustrate no secondary battery cell appropriately to enhance visibility in the housing.

As illustrated in Figs. 4 to 6, housing 2 is formed by engagement using first engagement mechanism 30 and second engagement mechanism 40 on one side of a pair of long sides constituting a rectangle of housing 2 in plan view, the one side being on a back side. To illustrate second engagement mechanism 40, a part of external wall 22 of second case 20 is cut in the perspective views of Figs. 5 and 6. In contrast, a front side is engaged using first engagement mechanism 30 as illustrated in Fig. 7. As illustrated in Figs. 8 to 10, the pair of short sides is engaged using first engagement mechanism 30. The long side and the short side on the front side may be engaged using second engagement mechanism 40 instead of first engagement mechanism 30. Details will be described below.

### (First engagement mechanism 30)

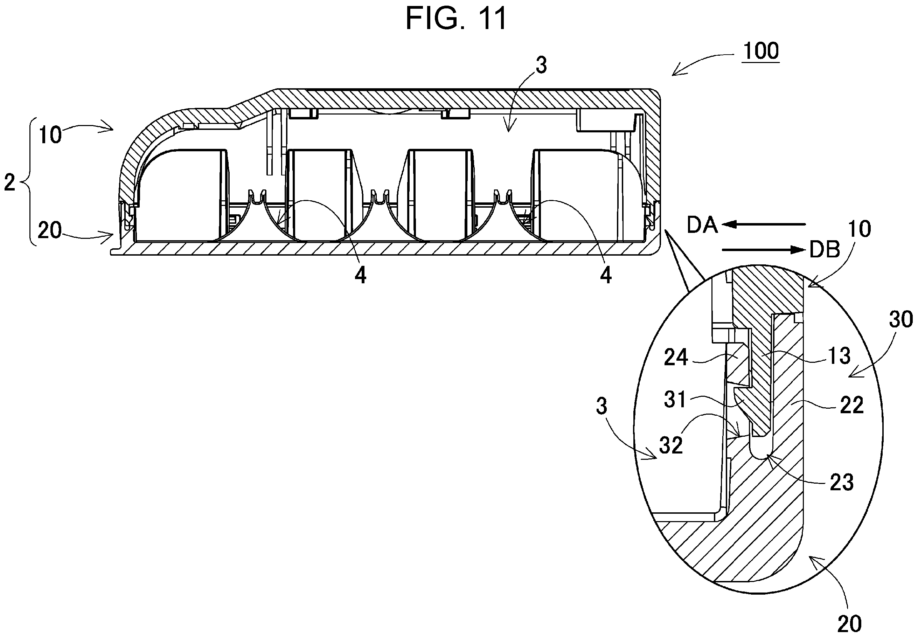

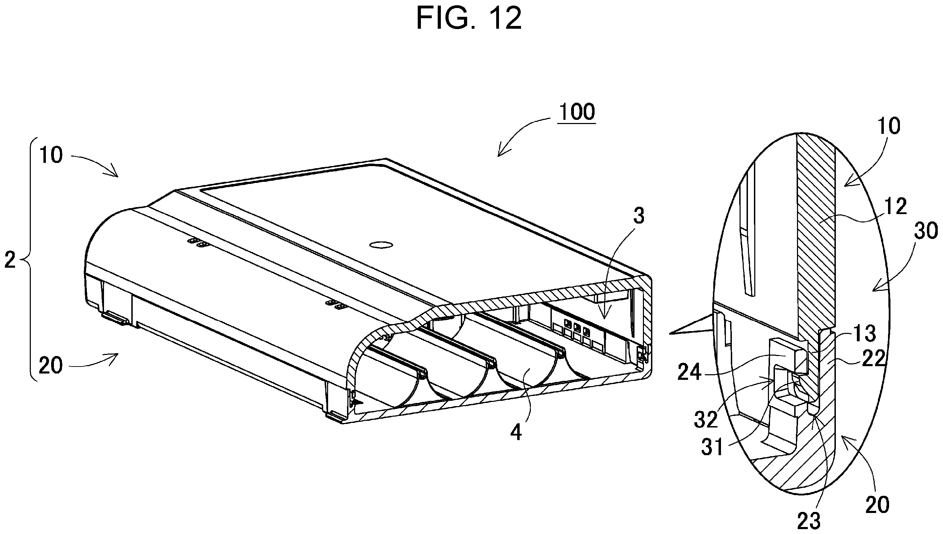

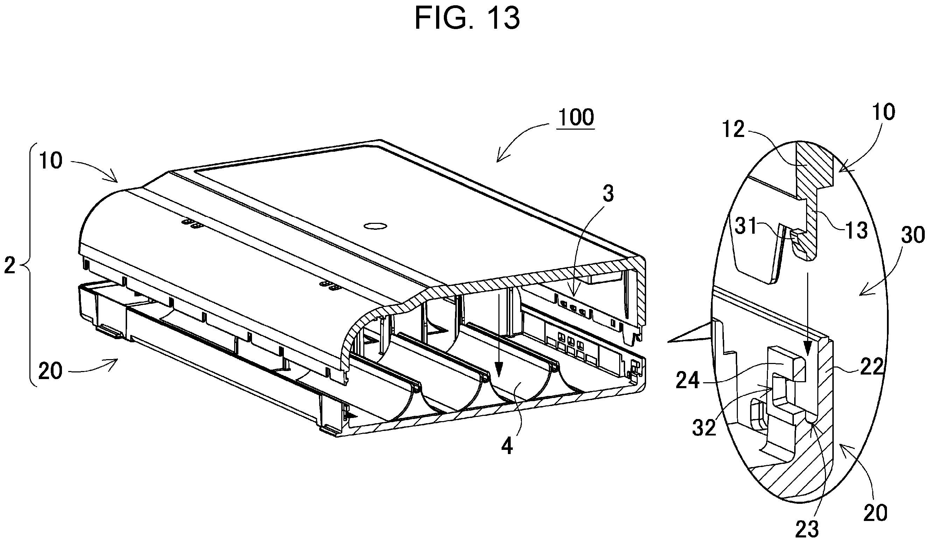

First engagement mechanism 30 is illustrated in Figs. 11 to 13. These drawings include: Fig. 11 that is a sectional view taken along line XI-XI in Fig. 1 with an enlarged view of a main part; Fig. 12 that is a sectional perspective view taken along line XI-XI in Fig. 1; and Fig. 13 that is an exploded perspective view of battery pack 100 in Fig. 12. First engagement mechanism 30 illustrated in these drawings includes first protrusion 31 of first case 10 and second recess 32 of second case 20. First protrusion 31 is provided in a part of an end edge of first case 10 and protrudes in first direction DA. Here, first direction DA indicates a direction toward housing space 3 of housing 2 perpendicularly from first wall part 12 and external wall 22 as illustrated in Fig. 11. Second recess 32 is a part of an end edge of second case 20, and is formed at a position corresponding to first protrusion 31 when second case 20 is joined to first case 10. First protrusion 31 is formed in a claw shape. Second recess 32 is formed in a hole shape to be engaged with first protrusion 31 in a claw shape.

First engagement mechanism 30 including first protrusion 31 and second recess 32 described above is also used for another side other than the long side on the back side constituting the rectangle of housing 2 in plan view. That is, first protrusions 31 are formed at a plurality of positions separated from each other on intermediate wall 13 of first case 10, and second recesses 32 are formed at a plurality of positions separated from each other on internal wall 24 of second case 20, also on the long side on the front side as illustrated in Figs. 7, 16, and 17, and the like, and thus fitting first case 10 to second case 20 by engaging first protrusions 31 with corresponding second recesses 32. Similarly, first protrusions 31 are formed at a plurality of positions separated from each other on intermediate wall 13 of first case 10, and second recesses 32 are formed at a plurality of positions separated from each other on internal wall 24 of second case 20, also on the short side as illustrated in Figs. 8, 9, and 10, and thus fitting first case 10 to second case 20 by engaging first protrusions 31 with corresponding second recesses 32.

### (Second engagement mechanism 40)

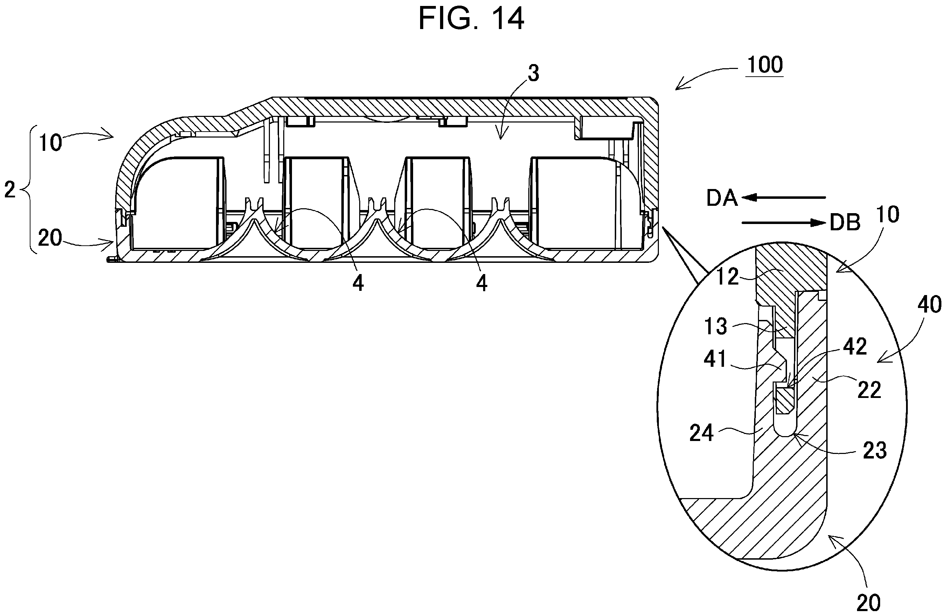

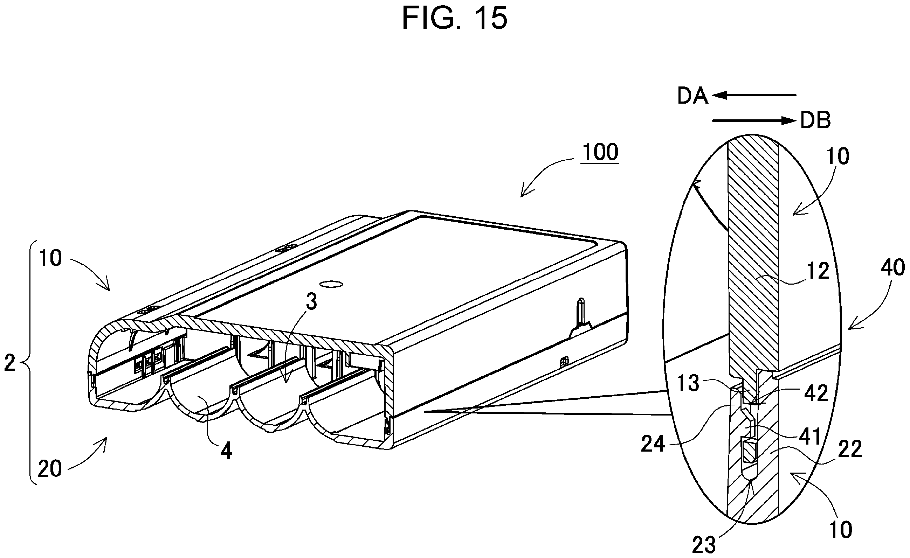

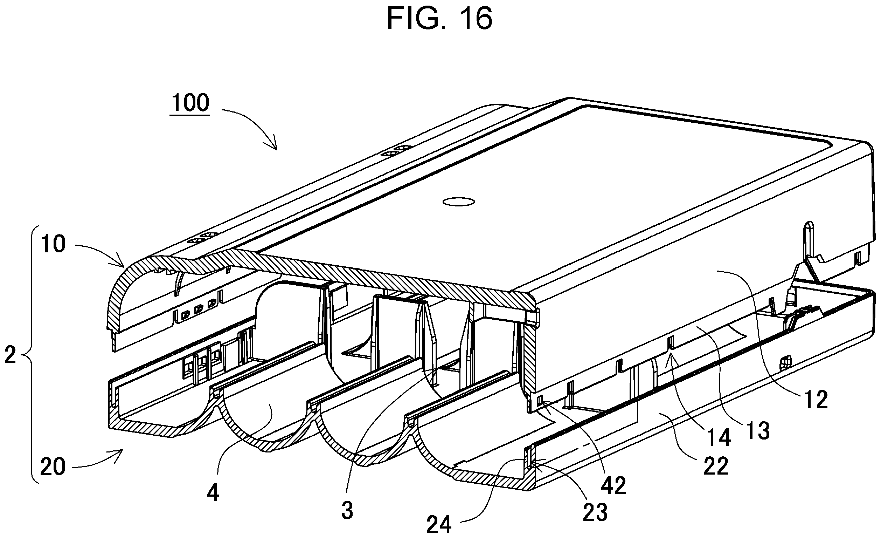

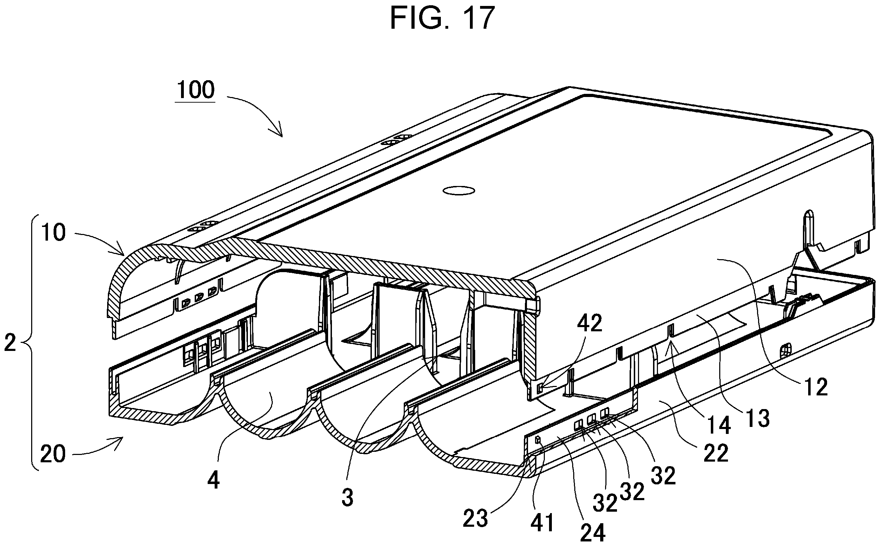

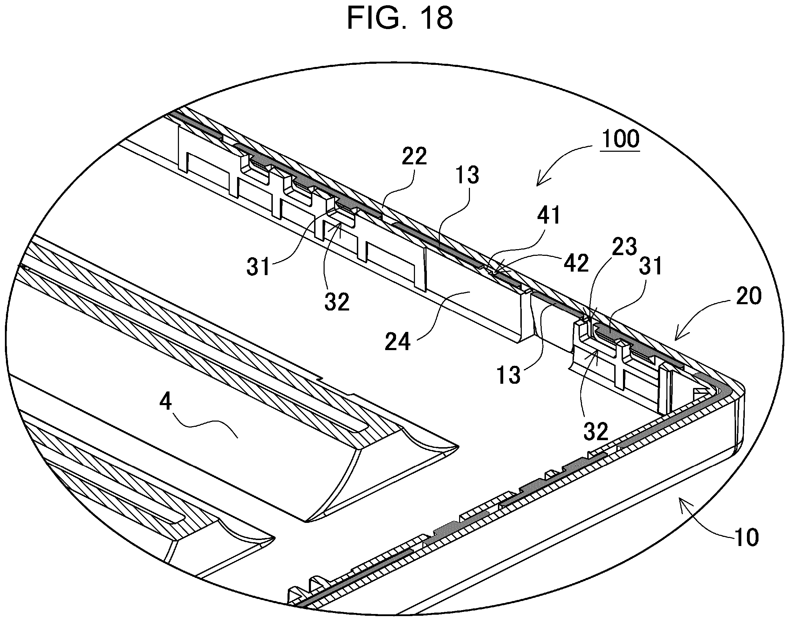

Next, second engagement mechanism 40 is illustrated in Figs. 14 to 18. These drawings include: Fig. 14 that is a sectional view with an enlarged view of a main part taken along line XIV-XIV in Fig. 1; Fig. 15 that is a sectional perspective view taken along line XIV-XIV in Fig. 1; Fig. 16 that is an exploded perspective view of battery pack 100 of Fig. 15; Fig. 17 that is an enlarged perspective view of a main part of Fig. 6; and Fig. 18 that is a horizontal sectional view of battery pack 100 of Fig. 1, taken along line XVIII-XVIII. Second engagement mechanism 40 illustrated in these drawings includes first recess 42 of first case 10 and second protrusion 41 of second case 20. First recess 42 is another part of the end edge of first case 10 and is provided at a position separated from first protrusion 31. Second protrusion 41 is another part of the end edge of second case 20, and is formed at a position separated from second recess 32 and at a position corresponding to first recess 42 when second case 20 is joined to first case 10. Second protrusion 41 is caused to protrude in second direction DB. Second direction DB is opposite to first direction DA, i.e., is perpendicular to external wall 22 from housing space 3 of housing 2. Second protrusion 41 is formed in a claw shape. First recess 42 is formed in a hole shape to be engaged with second protrusion 41 in a claw shape. As described above, when the engagement mechanisms protruding in respective directions different from each other are provided side by side on one surface of housing 2 to engage first case 10 with second case 20, stable connection strength against deformation can be exhibited.

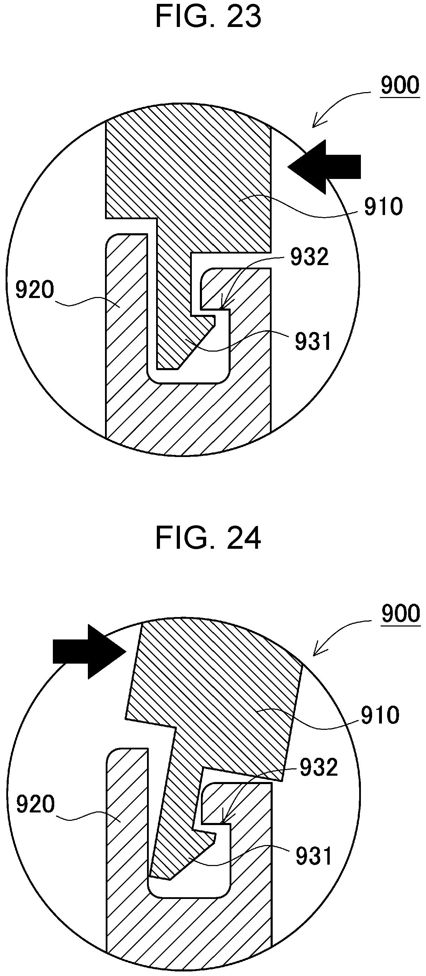

Here, one focus point of the present disclosure will be described. Known examples of the configuration in which the housing is divided into two include a configuration in which claw 931 provided in upper case 910 and locking piece 932 provided in lower case 920 are connected by claw-fitting as illustrated in Fig. 23. Housing 900 as described above needs to increase connection strength between divided upper case 910 and lower case 920. For example, stable connection strength against deformation is required to prevent housing 900 from being disassembled by impact at the time of falling. From the viewpoint of securing safety at the time of abnormality of a secondary battery cell internally housed, a housing for a battery pack is preferably increased in resistance of connection against deformation. In general, a secondary battery cell is configured to open a safety valve to release internal gas when internal pressure of an exterior can becomes high due to an abnormality or the like. In the event that any of secondary battery cells thermally runs away, a housing space of the housing may be caused to have a high pressure. When engagement between the upper and lower cases obtained by dividing the housing is released in a case as described above, a high-temperature and high-pressure gas or flame leaks to the outside, and thus requiring a structure to avoid this situation.

On the other hand, a fitting structure generally has a problem of being weak against deformation in a specific direction due to engagement using elastic deformation. For example, when stress is applied from inside (from right to left in Fig. 23) in a locking structure using claw fitting in which claw 931 is locked to locking piece 932 as illustrated in Fig. 23, claw 931 is deformed in a direction of being disengaged from locking piece 932 as illustrated in Fig. 24, and thus the engagement is likely to be released.

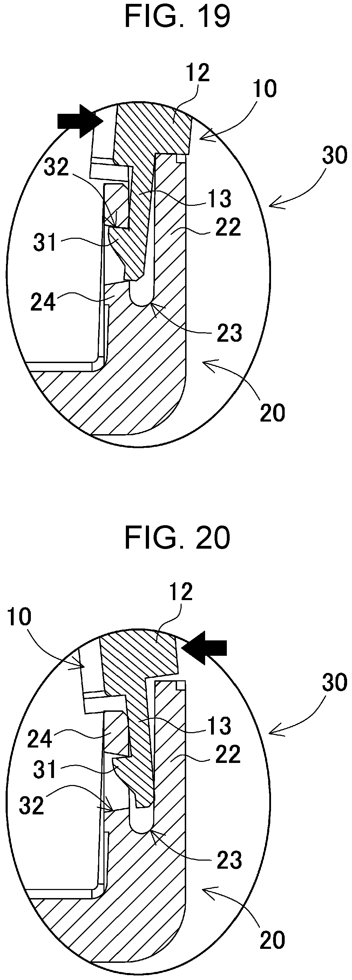

In contrast, battery pack 100 according to the present embodiment prepares two different engagement mechanisms that are caused to protrude in respective directions opposite to each other for engagement, thereby enhancing resistance at the time of deformation. That is, first engagement mechanism 30 illustrated in the enlarged sectional view of Fig. 11 includes first protrusion 31 that is provided on first case 10 and caused to protrude toward an inner surface of housing 2. This structure allows first protrusion 31 to be deformed in a direction in which first protrusion 31 tends to engage into second recess 32 more deeply when stress is applied in a direction in which first case 10 and second case 20 are deformed into a dogleg shape as illustrated in Fig. 19, so that first protrusion 31 acts in a direction forming strong engagement. However, when first case 10 and second case 20 are conversely deformed in a chevron shape as illustrated in Fig. 20, first protrusion 31 is deformed in a direction of releasing engagement of first protrusion 31.

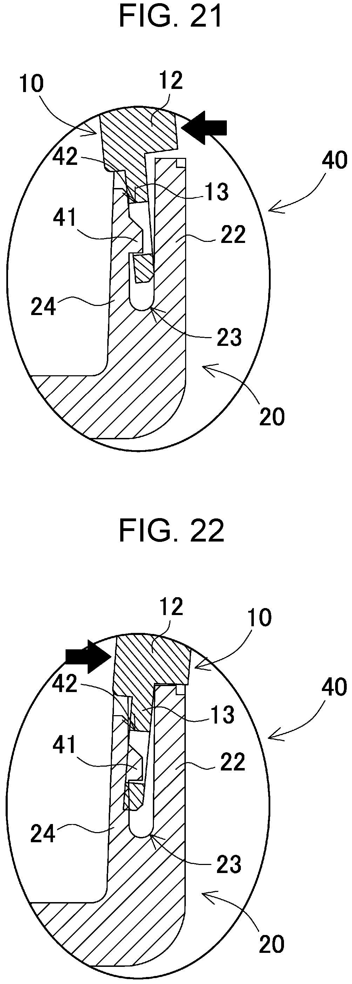

In contrast, second engagement mechanism 40 illustrated in Fig. 14 includes second protrusion 41 that is provided on second case 20 and is caused to protrude in a direction toward outside housing 2 contrary to first engagement mechanism 30. This structure allows second protrusion 41 to be deformed in a direction in which second protrusion 41 tends to engage into first recess 42 more deeply when stress is applied in a direction in which first case 10 and second case 20 are deformed into a chevron shape as illustrated in Fig. 21, so that second protrusion 41 acts in a direction forming strong engagement. That is, second engagement mechanism 40 provided at a different position exerts a strong engaging force as illustrated in Fig. 21 even for the deformation illustrated in Fig. 20, so that connection between first case 10 and second case 20 can be maintained.

In contrast, when stress is applied to deform first case 10 and second case 20 into a dogleg shape as illustrated in Fig. 22, second protrusion 41 is deformed in a direction of releasing engagement of second protrusion 41. However, first engagement mechanism 30 acts in a direction of enhancing engagement in this case as illustrated in Fig. 19, so that the connection between first case 10 and second case 20 can be maintained by first engagement mechanism 30 that is also similarly provided at a different position.

When the engagement mechanisms protruding in different directions as described above are disposed side by side on one surface of housing 2, any one of the engagement mechanisms can maintains engagement even with the one surface deformed in any direction, and thus reliability of the engagement can be enhanced. For example, when internal pressure in housing 2 increases and stress concentrates on a joint interface between first case 10 and second case 20, first engagement mechanism 30 is likely to be deformed into a chevron shape as illustrated in Figs. 20 and 21. Then, engagement of second engagement mechanism 40 is likely to be strengthened while engagement of first engagement mechanism is likely to be weakened, so that joining can be maintained. Conversely, when stress is applied to the joint interface between first case 10 and second case 20 from outside housing 2, the joint interface is likely to be deformed into a dogleg shape as illustrated in Figs. 19 and 22. Then, the engagement of second engagement mechanism 40 is likely to be weakened while joining of first engagement mechanism 30 is likely to be strengthened, so that the joining can be similarly maintained.

### (Internal wall 24)

Specifically, second case 20 includes internal wall 24 added to an inner surface of external wall 22. Internal wall 24 is formed apart from external wall 22 in housing space 3. As a result, insertion space 23 can be formed between external wall 22 and internal wall 24. As described above, a double wall structure is formed inside housing 2 to fabricate an engagement mechanism using the protrusions protruding in respective directions opposite to each other. Internal wall 24 is also provided with second recess 32. Then, second protrusion 41 of second case 20 is caused to protrude into insertion space 23.

Internal wall 24 may not be provided along the entire circumference of external wall 22. Fig. 4 shows an example in which internal wall 24 located on the long side of the square shape is partially provided along an inner surface of external wall 22 on the back side. In contrast, internal wall 24 on the front side on the long side and internal wall 24 on the short side are each formed along external wall 22 as illustrated in Figs. 2, 3, and 5. A small piece provided with only first engagement mechanism 30 is provided with external wall 22 and internal wall 24. In contrast, a small piece provided with first engagement mechanism 30 and second engagement mechanism 40 is provided with internal wall 24 in a discontinuous manner. However, it is needless to say that a plurality of second engagement mechanisms may be provided. For example, the plurality of second engagement mechanisms may be provided apart from each other on the long side on the back side, the long side constituting the square shape of housing 2 in plan view. Alternatively, the second engagement mechanism may also be provided on the long side or the short side on the front side.

Internal wall 24 is provided with second protrusion 41 and second recess 32 at respective positions separated from each other. When second protrusion 41 and second recess 32 are provided apart from each other in internal wall 24 common to them as illustrated in Figs. 17 and 18, first engagement mechanism 30 and second engagement mechanism 40 are brought close to each other to some extent to maintain a joining force.

### (Intermediate wall 13)

First case 10 is also provided with intermediate wall 13. Intermediate wall 13 is inserted into insertion space 23 between external wall 22 and internal wall 24. Fig. 18 illustrates a part of intermediate wall 13 of first case 10 in gray for the sake of description. Intermediate wall 13 is provided with first protrusion 31 and first recess 42. This configuration allows intermediate wall 13 to be sandwiched between internal wall 24 and external wall 22 while providing first engagement mechanism 30 and second engagement mechanism 40 of first case 10 and second case 20 in an interface between intermediate wall 13 and internal wall 24, so that deformation of intermediate wall 13 can be suppressed to stabilize engagement.

As illustrated in Figs. 4 to 6, first engagement mechanism 30 and second engagement mechanism 40 are provided on one side of the pair of long sides constituting the rectangle, the one side being on the back side. Here, first engagement mechanism 30 is provided at thirteen locations, while second engagement mechanism 40 is provided at one location. First engagement mechanisms 30 are provided on both sides of second engagement mechanism 40. When first engagement mechanism 30 and second engagement mechanism 40 are caused not only to be adjacent to each other but also to be alternately continued as described above, resistance to deformation in any one of first direction DA and second direction DB can be reliably exerted.

In contrast, a front side is engaged using first engagement mechanism 30 as illustrated in Fig. 7. Here, intermediate wall 13 is caused to protrude from an end surface of first case 10, and first protrusion 31 is formed apart from an inner surface of intermediate wall 13. As illustrated in Figs. 3, 4, and the like, internal wall 24 is divided by recess 14 formed in the middle. A part of internal wall 24 divided is provided with a plurality of first protrusions 31.

As described above, when first engagement mechanism 30 and second engagement mechanism 40, which are disposed protruding in respective directions opposite to each other, are combined as an engagement mechanism of housing 2 divided into first case 10 and second case 20, a connection structure can be fabricated in which first case 10 and second case 20 are less likely to be disengaged against deformation caused by impact or the like. In particular, the present disclosure can be suitably used in applications such as a battery pack required to address not only an impact from outside due to falling or the like but also a stress from inside, the stress being caused when secondary battery cell 1 stored in housing space 3 has a high pressure at the time of abnormality.

### INDUSTRIAL APPLICABILITY

The battery pack according to the present disclosure can be suitably used as a power source of a portable electric device such as an electric cleaner or an electric tool, and a housing of the power source. The present disclosure also can be appropriately used for applications such as a power source device for a moving body such as an assist bicycle or an electric cart.

### REFERENCE MARKS IN THE DRAWINGS

- 100: battery pack
- 1: secondary battery cell
- 2: housing
- 3: housing space
- 4: curved surface
- 10: first case
- 11: top surface
- 12: first wall part
- 13: intermediate wall
- 14: recess
- 20: second case
- 21: bottom surface
- 22: external wall
- 23: insertion space
- 24: internal wall
- 30: first engagement mechanism
- 31: first protrusion
- 32: second recess
- 40: second engagement mechanism
- 41: second protrusion
- 42: first recess
- 900: housing
- 910: upper case
- 920: lower case
- 931: claw
- 932: locking piece
- DA: first direction
- DB: second direction

## Claims

1. A battery pack comprising:
one or more secondary battery cells; and
a housing forming a housing space for housing the one or more secondary battery cells,
the housing being divided into a first case and a second case,
the first case and the second case being joined at a position where the first case and the second case overlap each other, and including at the position:
a first engagement mechanism in which
the first case includes a first protrusion protruding in a first direction at a part of an end edge of the first case, and
the second case includes a second recess formed at a position corresponding to the first protrusion in a part of an end edge of the second case when the second case is joined to the first case; and
a second engagement mechanism in which
the first case includes a first recess provided at a position separated from the first protrusion in another part of the end edge of the first case, and
the second case including a second protrusion formed at a position separated from the second recess in another part of the end edge of the second case, the position corresponding to the first recess when the second case is joined to the first case, and
the second protrusion protruding in a second direction opposite the first direction.

2. The battery pack according to Claim 1, wherein
the second case includes an external wall constituting a surface of the housing, and an internal wall separated from the external wall in the housing space,
the second protrusion protrudes into an insertion space defined by the external wall and the internal wall, and
the internal wall is provided with the second recess.

3. The battery pack according to Claim 2, wherein the internal wall is partially provided along an inner surface of the external wall.

4. The battery pack according to Claim 2 or 3, wherein
the first case includes an intermediate wall inserted between the external wall and the internal wall, and
the intermediate wall is provided with the first protrusion and the second recess.

5. The battery pack according to any one of Claims 1 to 4, wherein
the housing is formed in a square shape in plan view, and
the first engagement mechanism and the second engagement mechanism are provided on at least one of opposing sides of the square shape.

6. The battery pack according to any one of Claims 1 to 5, wherein
the housing is formed in a rectangular shape in plan view, and
the first engagement mechanism and the second engagement mechanism are provided on at least one of long sides of the rectangular shape.

7. The battery pack according to Claim 6, wherein
the first engagement mechanism and the second engagement mechanism are provided on one of long sides of the rectangle of the housing, and
any one of the first engagement mechanism and the second engagement mechanism is provided on another of the long sides of the rectangle of the housing.

8. The battery pack according to any one of Claims 1 to 7, wherein
the first protrusion or the second protrusion is formed in a claw shape, and
the second recess or the first recess is formed in a hole shape to be engaged with the first protrusion or the second protrusion in the claw shape.
